# FASCICULE DE BREVET EUROPEEN

(11) **EP 3 171 687 B1**
(45) Date de publication et mention de la délivrance du brevet: **22.06.2022**
(21) Numéro de dépôt: 15742220.5
(22) Date de dépôt: 23.07.2015
(51) Int. Cl.: A01D 44/00

(54) **DISPOSITIF ET PROCÉDÉ DE CURAGE D'UN COURS D'EAU OU D'UN PLAN D'EAU, POCHE POUR MATIÈRE VÉGÉTALE ET PROCÉDÉ DE STOCKAGE DE MATIÈRE VÉGÉTALE**
VORRICHTUNG UND BAGGERVERFAHREN FÜR WASSERLAUF ODER GEWÄSSER, BEUTEL FÜR PFLANZENMATERIAL UND VERFAHREN ZUM AUFBEWAHREN VON PFLANZENMATERIAL
DEVICE AND METHOD FOR DREDGING A WATERCOURSE OR BODY OF WATER, BAG FOR PLANT MATTER, AND METHOD FOR STORING PLANT MATTER

(30) Priorité: 23.07.2014 FR 1457121; 23.07.2014 FR 1457119
(43) Date de publication de la demande: 31.05.2017
(73) Titulaire: GECO GROUPE, 30290 Laudun L'Ardoise (FR)
(72) Inventeur: ROURE, Frédéric, F-30290 Laudun L'ardoise (FR)
(74) Mandataire: Cornuejols, Georges
(86) Numéro de dépôt international: PCT/EP2015/066834
(87) Numéro de publication internationale: WO 2016/012529

(56) Documents cités:
- WO-A1-2004/017715
- FR-A1- 2 276 773
- FR-A1- 2 700 240
- FR-A1- 2 972 462
- GB-A- 2 073 568
- US-A- 3 498 033
- US-A- 3 884 018
- US-A- 4 261 160
- US-A- 4 999 982
- US-A- 5 142 849
- US-A1- 2003 154 702
- US-A1- 2010 089 016

## Description

### DOMAINE TECHNIQUE DE L'INVENTION

La présente invention vise un dispositif, un procédé de curage d'un cours d'eau ou d'un plan d'eau, une poche pour matière végétale et un procédé de stockage de matière végétale. Elle s'applique, notamment, au curage de cours d'eau et de plans d'eau.

### ETAT DE LA TECHNIQUE

Les cours d'eau, naturels ou artificiels, permettent de limiter les risques d'inondation de sols par l'écoulement des surplus d'eaux pluviales locales dans des cours d'eau progressivement plus grands ou des plans d'eau permettant le stockage de ces surplus.

Ces cours d'eau transportent, en plus de l'eau, des sédiments provoquant leur envasement progressif. En particulier, ce phénomène naturel est renforcé dans des zones géographiques à topographie plane, où le sol est particulièrement susceptible à l'érosion ou dans les cours d'eau dont le débit est faible. A ces sédiments naturels peuvent s'ajouter des rejets industriels et urbains.

De plus, des plantes invasives peuvent se développer dans les cours d'eau, ce qui limite la capacité d'écoulement de l'eau. Ces plantes invasives peuvent également être une menace pour la biodiversité du cours d'eau. Ces plantes sont par exemple les Jussies (Ludwigia sp.), Egérie dense (Egeria densa), Elodées (Elodea sp.), Lagarosiphon (Lagarosiphon major) et Myriophylle du Brésil (Myriophyllum aquaticum). L'arrachage, tel que pratiqué dans les systèmes actuels, de ces plantes ne suffit pas à limiter leur expansion.

Afin de restaurer et d'entretenir la capacité d'écoulement des cours d'eau et de limiter l'impact sur la biodiversité de plantes invasives, il est nécessaire de réaliser une action de curage qui consiste à ôter les sédiments et les plantes de ces cours d'eau.

Dans des systèmes actuels, une tractopelle extrait les sédiments et plantes du cours d'eau et alimente une poche en matériau synthétique tissé, cette poche étant habituellement abandonnée sur une berge une fois l'action de curage réalisée.

Ces systèmes ne permettent pas de réduire durablement la quantité de plantes invasives présentes dans le cours d'eau. D'autre part, ces systèmes ont une mauvaise empreinte écologique en raison de l'abandon de matières synthétiques, et notamment en matière plastique, dans la nature.

On connait la demande de brevet US 2010/0089016 qui divulgue un dispositif d'hydrocurage comportant un maillage en matière biodégradable.

### OBJET DE L'INVENTION

La présente invention vise à remédier à tout ou partie de ces inconvénients.

A cet effet, selon un premier aspect, la présente invention vise une poche pour matière végétale, qui comporte :
- un maillage en géotextile comportant un maillage secondaire en géotextile biodégradable en fibre végétale non tissée pour retenir la matière végétale, ce maillage étant configuré pour être enroulé de manière à former un tube comportant, à une extrémité, une entrée pour la matière végétale,
- un moyen de maintien du maillage en position enroulée, - un moyen de fermeture de l'autre extrémité du tube et
- un moyen de déroulement de la poche remplie, au moins partiellement, de matière végétale pour extraire le maillage secondaire enroulé comportant la matière végétale, le moyen de déroulement comportant au moins une bande en polymère thermoplastique.

Grâce à ces dispositions, la poche, enroulable et déroulable, permet une collecte de matière végétale quand la poche est enroulée.

Un des problèmes supplémentaire des systèmes de l'art antérieur est que des poches en matériau synthétiques sont laissées en place une fois remplies, ce qui dégrade l'environnement.

Dans des modes de réalisation, la poche objet de la présente invention comporte un moyen de déroulement de la poche remplie, au moins partiellement, de matière végétale pour extraire la matière végétale.

Ces modes de réalisation permettent de relâcher de la matière végétale contenue dans la poche lorsque la poche est déroulée. De cette manière, la poche peut être réutilisée et l'empreinte écologique de l'utilisation de la poche est diminuée.

L'avantage de ces modes de réalisation est que les bandes en polymère thermoplastique présentent une grande solidité, ce qui permet d'exercer une force de traction importante sur ces bandes de manière à dérouler la poche lorsque cette poche est remplie de matière végétale.

Ces modes de réalisation réduisent l'empreinte écologique liée à la fabrication et à l'exploitation de la poche.

Dans des modes de réalisation, le maillage comporte au moins une partie en fibre de chanvre non tissée.

Ces modes de réalisation réduisent l'empreinte écologique liée à la fabrication et à l'exploitation de la poche en plus de réduire le coût de fabrication de la poche.

Dans des modes de réalisation, le maillage est configuré pour résister à une pression d'entrée de matière végétale supérieure à huit bars.

L'avantage de ces modes de réalisation est qu'ils permettent une projection puissante de matière végétale dans la poche de manière à faciliter le remplissage d'une poche de forme longue par exemple.

Dans des modes de réalisation, la poche objet de la présente invention comporte un moyen de flottaison sur une surface d'eau.

Ces modes de réalisation permettent de déplacer la poche sur un cours d'eau lors d'un curage du cours d'eau, par exemple.

Dans des modes de réalisation, la poche objet de la présente invention comporte un moyen de fixation à un moyen de déplacement de la poche remplie, au moins partiellement, de matière végétale.

L'avantage de ces modes de réalisation est qu'ils permettent de déplacer la poche remplie de matière végétale depuis, par exemple, un cours d'eau vers une surface dure à proximité du cours d'eau.

Selon un deuxième aspect, la présente invention vise un procédé de stockage de matière végétale, qui comporte:
- une étape d'enroulement d'une poche objet de la présente invention,
- une étape de positionnement de la poche dans un cours d'eau ou un plan d'eau,
- une étape de curage du cours d'eau ou du plan d'eau comportant une étape de broyage de matière végétale et une étape d'alimentation de l'entrée de la poche avec cette matière végétale,
- une étape d'extraction de la poche du cours d'eau ou du plan d'eau,
- une étape de dépôt de la poche sur une surface dure et
- une étape de déroulement de la poche de manière à relâcher la matière végétale, retenue dans la poche, sur la surface dure.

Les buts, avantages et caractéristiques du procédé objet de la présente invention étant similaires à ceux du dispositif objet de la présente invention, ils ne sont pas rappelés ici.

Selon un troisième aspect, la présente invention vise un dispositif de curage d'un cours d'eau ou d'un plan d'eau, qui comporte :
- une embarcation supportant un broyeur,
- le broyeur pour broyer des plantes présentes dans le cours d'eau ou dans le plan d'eau comportant une entrée pour plantes et une sortie pour plantes broyées et
- une poche flottante objet de la présente invention, connectée à la sortie du broyeur pour collecter des copeaux de plantes broyées.

Grâce à ces dispositions, le dispositif peut réaliser le curage de tout cours d'eau ou plan d'eau navigable par l'embarcation. De plus, le broyage de plantes permet un stockage de matière végétale plus dense, ce qui permet de réduire les dimensions de la poche, ou récipient.

Dans des modes de réalisation, le dispositif objet de la présente invention comporte un moyen d'aspiration de plantes configuré pour alimenter l'entrée du broyeur avec les plantes aspirées.

Ces modes de réalisation facilitent l'alimentation de plantes au broyeur en aspirant les plantes à proximité du dispositif.

Dans des modes de réalisation, le dispositif objet de la présente invention comporte un moyen de section, de tiges de plantes à broyer, immergé dans le cours d'eau ou dans le plan d'eau.

L'avantage de ces modes de réalisation est de faciliter l'alimentation des plantes au broyeur en évitant que des plantes subaquatiques demeurent hors de portée du broyeur.

Dans des modes de réalisation, le dispositif objet de la présente invention comporte, un moyen de stérilisation de graines broyées conjointement aux plantes et ayant traversé le broyeur.

Ces modes de réalisation limitent la capacité de prolifération de graines de manière à éviter la prolifération de plantes une fois la matière végétale broyée extraite de la poche ou dans la poche.

Dans des modes de réalisation, la poche en géotextile comporte au moins une partie en fibres végétales.

L'avantage de ces modes de réalisation est qu'ils permettent de réduire l'empreinte écologique de la poche dans le cas où la poche est placée sur une berge une fois remplie de matière végétale.

Dans des modes de réalisation, la poche comporte au moins une partie en chanvre non tissé.

Ces modes de réalisation permettent une réalisation à bas coût, en plus d'améliorer l'empreinte écologique, de la poche.

Dans des modes de réalisation, le dispositif objet de la présente invention comporte un moyen de décrochage de sédiments fixés à une paroi du plan d'eau ou du cours d'eau.

L'avantage de ces modes de réalisation est qu'ils permettent de broyer les racines de plantes fixées dans les sédiments.

Selon un quatrième aspect, la présente invention vise un procédé de curage d'un cours d'eau ou d'un plan d'eau, qui comporte :
- une étape de broyage de plantes présentes dans le cours d'eau ou le plan d'eau par un broyeur supporté par une embarcation et
- une étape de collecte des copeaux de plantes broyées dans une poche flottante associée au broyeur.

Les buts, avantages et caractéristiques du procédé objet de la présente invention étant similaires à ceux du dispositif objet de la présente invention, ils ne sont pas rappelés ici.

Dans des modes de réalisation, le procédé objet de la présente invention comporte, en amont de l'étape de broyage, une étape d'aspiration des plantes.

Ces modes de réalisation facilitent l'alimentation de plantes au broyeur en aspirant les plantes à proximité du dispositif.

Dans des modes de réalisation, le procédé objet de la présente invention comporte une étape de section de tiges des plantes à broyer.

L'avantage de ces modes de réalisation est de faciliter l'alimentation des plantes au broyeur en évitant que des plantes subaquatiques demeurent hors de portée du broyeur.

### BREVE DESCRIPTION DES FIGURES

D'autres avantages, buts et caractéristiques particulières de l'invention ressortiront de la description non limitative qui suit d'au moins un mode de réalisation particulier du dispositif et du procédé objets de la présente invention, en regard des dessins annexés, dans lesquels :
- la figure 1 représente, schématiquement et vu de dessus, un mode de réalisation particulier du dispositif objet de la présente invention,
- la figure 2 représente, schématiquement, un logigramme d'étapes particulier du procédé objet de la présente invention,
- la figure 3 représente, schématiquement et vu de dessus, un mode de réalisation particulier de la poche objet de la présente invention et
- la figure 4 représente, schématiquement, un logigramme d'étapes particulier du procédé objet de la présente invention.

### DESCRIPTION D'EXEMPLES DE REALISATION DE L'INVENTION

La présente description est donnée à titre non limitatif.

On qualifie, pour le reste de ce document, de « géotextile » un tissu généralement en matériau synthétique configuré pour laisser passer de l'eau.

Les modes de réalisation décrits ci-dessous peuvent être avantageusement combinés.

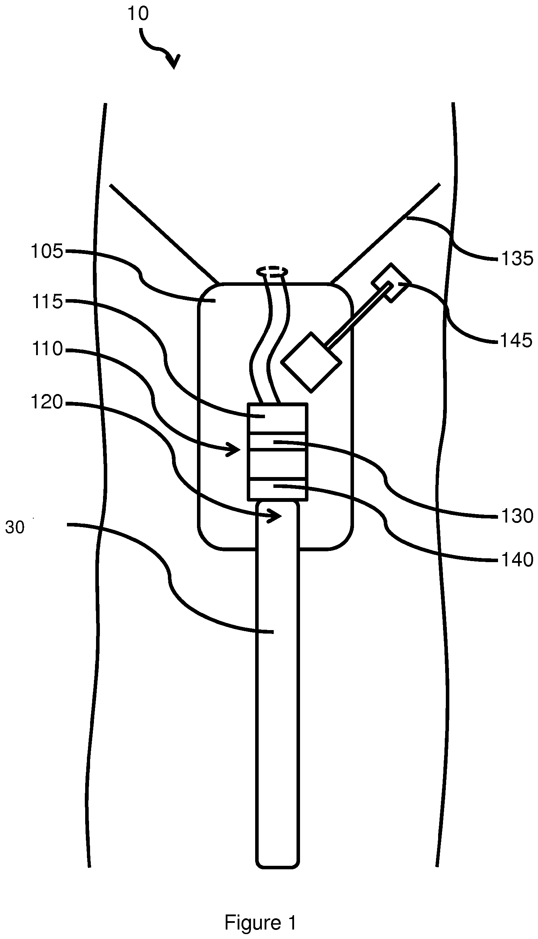

On observe, sur la figure 1, qui n'est pas à l'échelle, une vue en coupe d'un mode de réalisation du dispositif 10 objet de la présente invention. Ce dispositif 10 de curage d'un cours d'eau ou d'un plan d'eau comporte :
- une embarcation 105 supportant un broyeur,
- le broyeur 110 pour broyer des plantes présentes dans le cours d'eau ou dans le plan d'eau comportant une entrée 115 pour plantes et une sortie 120 pour plantes broyées,
- un moyen 135 de section, de tiges de plantes à broyer, immergé dans le cours d'eau ou dans le plan d'eau,
- un moyen 145 de décrochage de sédiments fixés à une paroi du plan d'eau ou du cours d'eau,
- un moyen 130 d'aspiration de plantes configuré pour alimenter l'entrée 115 du broyeur 110 avec les plantes aspirées,
- un moyen 140 de stérilisation de graines broyées conjointement aux plantes et ayant traversé le broyeur 110 et
- un récipient 125 flottant, connecté à la sortie du broyeur pour collecter des copeaux de plantes broyées.

L'embarcation 105 est, par exemple, un bateau à moteur comportant une source d'alimentation électrique du reste du dispositif 10. Cette alimentation électrique peut être générée par le fonctionnement du moteur de l'embarcation 105 ou par une source d'alimentation autonome montée à bord de l'embarcation 105, telle une pile ou une batterie par exemple.

Le broyeur 110 comporte, par exemple, une partie motorisée rotative couplée au moyen d'aspiration 130, la partie motorisée rotative étant équipée de lames montées sur un axe rotatif mis en mouvement par un moteur hydraulique. Ce broyeur permet la découpe et le décolmatage de la matière aspirée dans l'entrée 115 pour plantes. Les lames sont montées, par exemple, sur la partie motorisée rotative dont la rotation s'effectue devant une embouchure du moyen d'aspiration 130. Dans des variantes, l'actionnement du moyen d'aspiration 130 entraine l'actionnement du broyeur 110. Dans d'autres variantes, le moyen d'aspiration 130 et le broyeur 110 sont commandés indépendamment. Les lames sont mises en rotation, par exemple, par un moteur hydraulique.

Le moyen de section 135 est, par exemple, une lame fixée à un support de lame, ce support de lame étant mobile. Le dispositif 10 comporte un moyen de positionnement du support de lame de manière à immerger le support de lame dans le cours d'eau ou dans le plan d'eau à traiter. Dans des variantes, le moyen de section 135 comporte deux lames supportées, chacune, par un support de lame. Ces supports de lame sont positionnés de manière à ce que, lorsque l'embarcation 105 avance sur un cours d'eau, les lames couvrent au moins la moitié de la largeur de cours d'eau.

Le moyen de décrochage 145 est, par exemple, une lame de caoutchouc ou de métal, orientée de façon oblique vers la base du lit du cours d'eau ou du plan d'eau. Cette lame permet de mettre en suspension des sédiments fixés à la base du lit et arrachés au passage de la lame mise en mouvement par l'embarcation 105. Le moyen de décrochage 145 peut être associé au moyen de section 135 dans le cas d'un support conjoint du moyen de décrochage 145 et du moyen de section 135 par un bras de support.

Dans des variantes, ce moyen de décrochage 145 est un ensemble de buses configurées pour projeter de l'eau, aspirée dans le cours d'eau ou le plan d'eau, sous pression sur la base du lit en amont d'une lame rigide de récupération des sédiments mis en suspension.

Dans des modes de réalisation préférentiels, le dispositif 10 comporte un moyen de récupération de plantes coupées et de sédiments mis en suspensions alimentant le moyen d'aspiration 130. Ce moyen de récupération est, par exemple, formé par deux bras orientés vers l'avant de l'embarcation 105 de manière à diriger les plantes coupées et les sédiments vers le moyen d'aspiration 130 dont une entrée est positionnée entre les deux bras.

Le moyen d'aspiration 130 est, par exemple, une pompe hydraulique configurée pour aspirer eau, plantes et sédiments à proximité d'une ouverture au moins partiellement immergée dans le cours d'eau ou le plan d'eau. Les matériaux aspirés sont entrés dans le broyeur 110. Les matériaux broyés sont évacués par une sortie 120 du broyeur 110. Dans des variantes, ce moyen d'aspiration 130 présente un débit d'aspiration de 430m³ par heure.

Les matériaux sortis du broyeur 110 traversent le moyen de stérilisation 140. Ce moyen de stérilisation 140 est, par exemple, un four à micro-ondes configuré pour irradier les graines sorties du broyeur 110.

Le moyen d'aspiration 130 agit également comme moyen d'éjection des matériaux broyés dans le récipient 125.

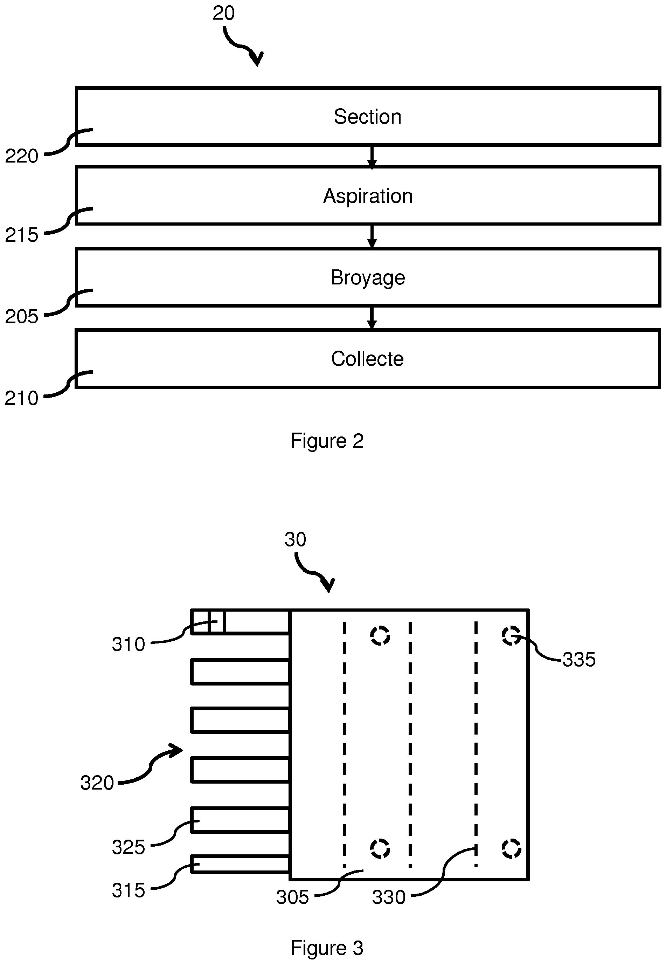

Le récipient 125 est, par exemple, une poche en géotextile comportant au moins une partie en fibres végétales. Un mode de réalisation d'une telle poche est notamment décrit en regard de la figure 3. Ces fibres végétales étant, par exemple, du chanvre non tissé.

Ce géotextile en fibres végétales comporte, par exemple :
- des tiges de végétaux écrasées d'un diamètre supérieur à cinq millimètres,
- des fragments de tiges végétales et
- des fibres végétales partiellement attachées aux dites tiges écrasées, les tiges et fragments de tiges étant entrelacés par des liaisons mécaniques produites par projection d'eau.

Ce géotextile 125 est réalisé, par exemple, par la mise en oeuvre d'un procédé comportant :
- une étape de disposition de végétaux en une nappe de tiges de végétaux écrasées d'un diamètre supérieur à cinq millimètres, des fragments de tiges végétales et de fibres végétales brutes partiellement attachées aux dites tiges écrasées et
- une étape de projection d'eau sur ladite nappe pour former des liaisons mécaniques entre les tiges de végétaux écrasées, les fragments de tiges végétales et les fibres végétales de ladite nappe.

Ce procédé comporte, par exemple :
- une étape d'introduction de végétaux, sous la forme de végétaux de grande dimension, tel des tiges mesurant jusqu'à 2,5 mètres par exemple,
- une étape de réduction partielle des végétaux en tiges pour former des éléments de tige d'une longueur préférentiellement supérieure à vingt centimètres, et préférentiellement supérieure à cinquante centimètres,
- une étape d'écrasement des végétaux pour former une nappe de tiges de végétaux écrasées d'un diamètre supérieur à cinq millimètres, de fragments de tiges végétales et de fibres végétales brutes partiellement attachées aux dites tiges écrasées,
- une étape d'orientation des tiges et/ou des fibres selon des directions différentes,
- une étape d'harmonisation de l'épaisseur de la nappe de fibres,
- une étape d'incorporation dans les fibres de cordes ou de câbles parallèles à la longueur de la nappe de fibres,
- une étape de création de liaisons mécaniques entre les fibres de la nappe, dans l'épaisseur de la nappe, par projection d'eau sous pression sur les fibres végétales ou, en variante, avec une machine à piquer multi-aiguilles.

La matière végétale utilisée pour la mise en œuvre de ce procédé est, par exemple, un ensemble de fibres de chanvre.

Ce récipient 125 est configuré pour flotter, même plein, sur le cours d'eau ou le plan d'eau en raison de la composition de ce récipient 125. Dans des variantes, ce récipient 125 comporte des flotteurs.

On observe, sur la figure 2, un logigramme d'étapes particulier du procédé 20 objet de la présente invention. Ce procédé 20 de curage d'un cours d'eau ou d'un plan d'eau comporte :
- une étape 220 de section de tiges des plantes à broyer,
- une étape 215 d'aspiration des plantes,
- une étape 205 de broyage de plantes présentes dans le cours d'eau ou le plan d'eau par un broyeur supporté par une embarcation et
- une étape 210 de collecte des copeaux de plantes broyées dans un récipient flottant associé au broyeur.

L'étape 220 de section de tiges des plantes à broyer est réalisée, par exemple, par un moyen de section 135 tel que décrit en regard de la figure 1.

L'étape 215 d'aspiration est réalisée, par exemple, par un moyen d'aspiration 130 tel que décrit en regard de la figure 1.

L'étape 205 de broyage est réalisée, par exemple, par un broyeur 110 tel que décrit en regard de la figure 1.

L'étape 210 de collecte est réalisée, par exemple, par un récipient 30 tel que décrit en regard de la figure 1.

On observe, sur la figure 3, un mode de réalisation particulier de la poche 30 objet de la présente invention. Cette poche 30 pour matière végétale comporte :
- un maillage 305 en géotextile pour retenir la matière végétale, ce maillage étant configuré pour être enroulé de manière à former un tube comportant, à une extrémité, une entrée pour la matière végétale,
- un moyen 310 de maintien du maillage en position enroulée,
- un moyen 315 de fermeture de l'autre extrémité du tube,
- un moyen 320 de déroulement de la poche remplie, au moins partiellement, de matière végétale pour extraire la matière végétale qui comporte au moins une bande 325 en polymère thermoplastique,
- un moyen 330 de flottaison sur une surface d'eau et
- un moyen 335 de fixation à un moyen de déplacement de la poche remplie, au moins partiellement, de matière végétale.

Le maillage 305 en géotextile est, par exemple, une bâche en matière synthétique comportant au moins une partie en fibre végétale non tissée. Cette fibre végétale est, par exemple, de la fibre en chanvre non tissée. Cette bâche souple est de forme rectangulaire de manière à ce que, une fois ce rectangle enroulé, la bâche adopte une forme tubulaire initialement ouverte aux deux extrémités après l'enroulement. Une des extrémités est repliée et fermée par le moyen de fermeture 315 de manière à former une poche avec le tube. Ce moyen de fermeture 315 est, par exemple, une sangle en tissu auto-agrippant positionnée par un utilisateur de manière à être enroulée autour du tube et serrer l'extrémité à refermer. Dans des variantes, ce moyen de fermeture 315 est un ensemble de crochets associés à des élastiques enroulés autour du tube et fixés à des œillets présents sur le maillage 305.

Le maillage 305 est configuré pour résister à une pression d'entrée de matière végétale supérieure à huit bars. Préférentiellement, la pression d'entrée est de dix bars.

Dans des variantes préférentielles, un maillage secondaire en géotextile biodégradable est enroulé à l'intérieur du maillage 305 une fois ce maillage 305 enroulé de manière à ce que le maillage secondaire épouse la forme tubulaire du maillage 305.

Le but de ce maillage 305 est de retenir les plantes entrées en permettant à une phase liquide, comportant majoritairement de l'eau, de quitter le maillage 305. Le but du maillage secondaire est de maintenir en forme les plantes séchées une fois le maillage 305 déroulé. Ce maillage secondaire, biodégradable de la même manière que la matière comportée, permet de limiter l'empreinte écologique du dispositif 30.

Le tube formé par le maillage 305 enroulé est maintenu dans cette position par le moyen de maintien 310. Ce moyen de maintien 310 est, par exemple, un moyen de fixation d'une partie du maillage 305 à une autre partie du maillage 305, tel un jeu de crochets d'une part et d'œillets d'autre part par exemple.

Le moyen de déroulement 320 est, par exemple, un ensemble de bandes 325 en polymère thermoplastique, tel du Kevlar (marque déposée) par exemple, associés à un côté du maillage 305. Lorsqu'une traction est réalisée sur ce moyen de déroulement 320, le tube formé par le maillage 305 est déroulé mécaniquement.

Le moyen de flottaison 330 est, par exemple, un ensemble de flotteurs positionnés le long du maillage 305.

Le moyen de fixation 335 est, par exemple, un ensemble d'œillets permettant la fixation de crochets, par exemple, ces crochets étant associés à une machine réalisant le déplacement de la poche depuis un cours d'eau vers une surface dure à proximité du cours d'eau.

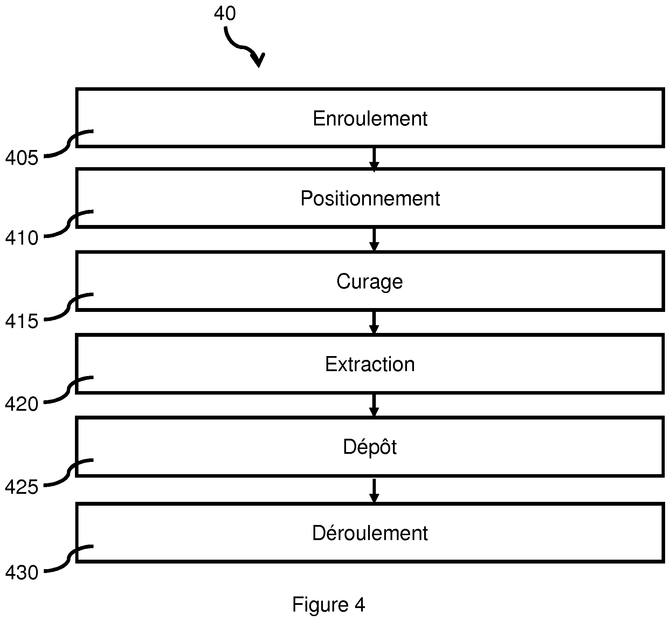

On observe, sur la figure 4, un logigramme d'étapes particulier du procédé 40 objet de la présente invention. Ce procédé 40 de stockage de matière végétale comporte :
- une étape 405 d'enroulement d'une poche telle que décrite en regard de la figure 3,
- une étape 410 de positionnement de la poche dans un cours d'eau ou un plan d'eau,
- une étape 415 de curage du cours d'eau ou du plan d'eau comportant une étape de broyage de matière végétale et une étape d'alimentation de l'entrée de la poche avec cette matière végétale,
- une étape 420 d'extraction de la poche du cours d'eau ou du plan d'eau,
- une étape 425 de dépôt de la poche sur une surface dure et
- une étape 430 de déroulement de la poche de manière à relâcher la matière végétale, retenue dans la poche, sur la surface dure.

L'étape d'enroulement 405 est réalisée, par exemple, par un utilisateur repliant le maillage de la poche de manière à créer une forme de tube aplani fermé à une extrémité.

L'étape de positionnement 410 de la poche dans un cours d'eau est réalisée, par exemple, par association de la poche à une embarcation comportant un broyeur, de sorte que l'entrée de la poche soit reliée à la sortie du broyeur. Lorsque l'embarcation avance dans le cours d'eau, la poche est mécaniquement entrainée dans le cours d'eau et flotte à la surface de ce cours d'eau.

L'étape de curage 415 est réalisée, par exemple, par le dispositif 10 décrit en regard de la figure 1, dans lequel le récipient décrit correspond à la poche.

L'étape d'extraction 420 de la poche est réalisée, par exemple, par la fixation à la poche de crochets permettant la traction, par une machine, de la poche hors du lit du cours d'eau ou du plan d'eau. Dans des variantes, l'extraction 420 est réalisée par traction de l'embarcation hors de l'eau, l'embarcation entraînant la poche hors de l'eau.

L'étape de dépôt 425 est réalisée, par exemple, par retrait des fixations utilisées pour extraire la poche hors du cours d'eau ou du plan d'eau.

L'étape de déroulement 430 est réalisée après une période de séchage de la poche par exemple. Au cours de cette étape de déroulement 430, une traction est réalisée sur des bandes en polymère thermoplastique de manière à ce que la poche soit déroulée et le contenu de la poche versé sur la surface dure.

## Revendications

1. Poche (30) pour matière végétale, **caractérisée en ce qu'**elle comporte :
- un maillage (305) en géotextile comportant un maillage secondaire en géotextile biodégradable en fibre végétale non tissée pour retenir la matière végétale, ce maillage étant configuré pour être enroulé de manière à former un tube comportant, à une extrémité, une entrée pour la matière végétale,
- un moyen (310) de maintien du maillage en position enroulée,
- un moyen (315) de fermeture de l'autre extrémité du tube et
- un moyen (320) de déroulement de la poche remplie, au moins partiellement, de matière végétale pour extraire le maillage secondaire enroulé comportant la matière végétale, le moyen de déroulement comportant au moins une bande (325) en polymère thermoplastique.

2. Poche (30) selon la revendication 1, dans lequel le maillage (305) comporte au moins une partie en fibre de chanvre non tissée.

3. Poche (30) selon l'une des revendications 1 à 2, dans lequel le maillage (305) est configuré pour résister à une pression d'entrée de matière végétale supérieure à huit bars.

4. Procédé (20) de curage d'un cours d'eau ou d'un plan d'eau, caractérisé ce qu'il comporte :
- une étape (205) de broyage de plantes présentes dans le cours d'eau ou le plan d'eau par un broyeur supporté par une embarcation et
- une étape (210) de collecte des copeaux de plantes broyées dans une poche selon l'une des revendications 1 à 3 associée au broyeur.

5. Procédé (20) selon la revendication 4, qui comporte, en amont de l'étape (205) de broyage, une étape (215) d'aspiration des plantes.

6. Procédé (40) de stockage de matière végétale, **caractérisé en ce qu'**il comporte :
- une étape (405) d'enroulement d'une poche selon l'une des revendications 1 à 3,
- une étape (410) de positionnement de la poche dans un cours d'eau ou un plan d'eau,
- une étape (415) de curage du cours d'eau ou du plan selon l'une des revendications 4 ou 5,
- une étape (420) d'extraction de la poche du cours d'eau ou du plan d'eau,
- une étape (425) de dépôt de la poche sur une surface dure et
- une étape (430) de déroulement de la poche de manière à relâcher la matière végétale, retenue dans la poche, sur la surface dure.

7. Dispositif (10) de curage d'un cours d'eau ou d'un plan d'eau, **caractérisé en ce qu'**il comporte :
- une embarcation (105) supportant un broyeur,
- le broyeur (110) pour broyer des plantes présentes dans le cours d'eau ou dans le plan d'eau comportant une entrée (115) pour plantes et une sortie (120) pour plantes broyées et
- une poche (30) flottante selon l'une des revendications 1 à 3, connectée à la sortie du broyeur pour collecter des copeaux de plantes broyées.

8. Dispositif (10) selon la revendication 7, qui comporte un moyen (130) d'aspiration de plantes configuré pour alimenter l'entrée (115) du broyeur (110) avec les plantes aspirées.

9. Dispositif (10) selon l'une des revendications 7 ou 8, qui comporte un moyen (135) de section, de tiges de plantes à broyer, immergé dans le cours d'eau ou dans le plan d'eau.

10. Dispositif (10) selon l'une des revendications 7 à 9, qui comporte, un moyen (140) de stérilisation de graines broyées conjointement aux plantes et ayant traversé le broyeur (110).

11. Dispositif (10) selon la revendication 10, dans lequel la poche (30) comporte au moins une partie en chanvre non tissé.

12. Dispositif (10) selon l'une des revendications 7 à 10, qui comporte un moyen (145) de décrochage de sédiments fixés à une paroi du plan d'eau ou du cours d'eau.

## Patentansprüche

1. Beutel (30) für Pflanzenmaterial, **dadurch gekennzeichnet, dass** er umfasst:
- ein Netz (305) aus Geotextil, umfassend ein sekundäres Netz aus biologisch abbaubarem Geotextil aus Vlies aus Pflanzenfasern zum Zurückhalten des pflanzlichen Materials, wobei dieses Netz ausgestaltet ist, um derart gewickelt zu sein, dass es eine Röhre bildet, die an einem Ende einen Eingang für das pflanzliche Material umfasst,
- ein Haltemittel (310) des Netzes in der gewickelten Position,
- ein Verschlussmittel (315) des anderen Endes der Röhre und
- ein Abwickelmittel (320) des wenigstens teilweise mit Pflanzenmaterial gefüllten Beutels zum Herausnehmen des gewickelten, das Pflanzenmaterial umfassenden sekundären Netzes, wobei das Abwickelmittel wenigstens ein Band (325) aus thermoplastischem Polymer umfasst.

2. Beutel (30) gemäß Anspruch 1, bei dem das Netz (305) wenigstens einen Teil aus Vlies-Hanffasern umfasst.

3. Beutel (30) gemäß einem der Ansprüche 1 bis 2, bei dem das Netz (305) ausgestaltet ist, um einem Eingangsdruck des Pflanzenmaterials von mehr als acht Bar zu widerstehen.

4. Klärverfahren (20) eines Wasserlaufs oder einer Wasserfläche, **dadurch gekennzeichnet, dass** es umfasst:
- einen Zerkleinerungsschritt (205) der im Wasserlauf oder der Wasserfläche vorhandenen Pflanzen durch einen von einem Boot getragenen Zerkleinerer und
- einen Sammelschritt (210) der zerkleinerten Pflanzen in einem Beutel gemäß einem der Ansprüche 1 bis 3, der dem Zerkleinerer zugeordnet ist.

5. Verfahren (20) gemäß Anspruch 4, das dem Zerkleinerungsverfahren (205) vorgeschaltet einen Ansaugschritt (215) der Pflanzen umfasst.

6. Verfahren (40) zum Lagern von Pflanzenmaterial, **dadurch gekennzeichnet, dass** es umfasst:
- einen Aufwickelschritt (405) eines Beutels gemäß einem der Ansprüche 1 bis 3,
- einen Positionierungsschritt (410) des Beutels in einem Wasserlauf oder auf einer Wasserfläche,
- einen Klärschritt (415) des Wasserlaufs oder der Wasserfläche gemäß einem der Ansprüche 4 oder 5,
- einen Extraktionsschritt (420) des Beutels aus dem Wasserlauf oder von der Wasserfläche,
- einen Ablegeschritt (435) des Beutels auf einer harten Oberfläche und
- einen Abwickelschritt (430) des Beutels derart, dass das im Beutel zurückgehaltene Pflanzenmaterial auf der harten Oberfläche freigesetzt wird.

7. Klärvorrichtung (10) eines Wasserlaufs oder einer Wasserfläche, **dadurch gekennzeichnet, dass** sie umfasst:
- ein Boot (105), das einen Zerkleinerer trägt,
- den Zerkleinerer (110) zum Zerkleinern der im Wasserlauf oder auf einer Wasserfläche vorhandenen Pflanzen umfassend einen Eingang (115) für Pflanzen und einen Ausgang (120) für zerkleinerte Pflanzen und
- einen schwimmenden Beutel (30) gemäß einem der Ansprüche 1 bis 3, der an den Ausgang des Zerkleinerers zum Auffangen der Schnitzel von zerkleinerten Pflanzen angeschlossen ist.

8. Vorrichtung (10) gemäß Anspruch 7, die ein Ansaugmittel (130) von Pflanzen umfasst, das ausgestaltet ist, um den Eingang (115) des Zerkleinerers (110) mit den angesaugten Pflanzen zu versorgen.

9. Vorrichtung (10) gemäß einem der Ansprüche 7 oder 8, die ein Schneidmittel (135) der zu zerkleinernden Pflanzenstängel umfasst, das in den Wasserlauf oder in die Wasserfläche eingetaucht ist.

10. Vorrichtung (10) gemäß einem der Ansprüche 7 bis 9, die ein Sterilisationsmittel (14) von gemeinsam mit den Pflanzen zerkleinerten Körnern umfasst, die den Zerkleinerer (110) durchquert haben.

11. Vorrichtung (10) gemäß Anspruch 10, bei der der Beutel (30) wenigstens einen Teil aus Vlies-Hanf umfasst.

12. Vorrichtung (10) gemäß einem der Ansprüche 7 oder 10, die ein Ablösemittel (145) der Sedimente umfasst, die an einer Wand der Wasserfläche oder des Wasserlaufs befestigt sind.

## Claims

1. Bag (30) for plant matter, **characterized in that** it comprises:
- a meshing (305) made of geotextile comprising a secondary meshing made of biodegradable geotextile of non-woven vegetable fiber for holding the plant matter, this meshing being configured to be rolled up to form a tube comprising, at one extremity, an inlet for the plant matter;
- a means (310) for maintaining the meshing in the rolled-up position;
- a means (315) for closing the other extremity of the tube; and
- a means (320) for unrolling the bag at least partially filled with plant matter so as to extract the secondary meshing comprising the plant matter, the unrolling means comprising at least one strip (325) made of thermoplastic polymer.

2. Bag (30) according to claim 1, wherein the meshing (305) comprises at least one portion made of non-woven hemp fiber.

3. Bag (30) according to one of claims 1 to 2, wherein the meshing (305) is configured to withstand a plant matter input pressure higher than eight bar.

4. Method (20) of dredging a watercourse or body of water, **characterized in that** it comprises:
- a step (205) of grinding plants present in the watercourse or body of water by a grinder carried by a watercraft; and
- a step (210) of collecting scraps of ground plants in a bag according to one of claims 1 to 3 connected to the grinder.

5. Method (20) according to claim 4, which comprises, prior to the grinding step (205), a step (215) of sucking up plants.

6. Method (40) for storing plant matter, **characterized in that** it comprises:
- a step (405) of rolling up a bag according to one of claims 1 to 3;
- a step (410) of positioning the bag in a watercourse or body of water;
- a step (415) of dredging a watercourse or body of water according to one of claims 4 or 5;
- a step (420) of extracting the bag from the watercourse or body of water;
- a step (425) of depositing the bag on a hard surface; and
- a step (430) of unrolling the bag to release the plant matter held in the bag onto the hard surface.

7. Device (10) for dredging a watercourse or body of water, **characterized in that** it comprises:
- a watercraft (105) which carries a grinder;
- the grinder (110) for grinding plants found in the watercourse or body of water comprising an inlet (115) for plants and an outlet (120) for ground plants; and
- a floating bag (30) according to one of claims 1 to 3, connected to the outlet of the grinder to collect scraps of ground plants.

8. Device (10) according to claim 7, which comprises a means (130) for sucking up plants, configured to feed the inlet (115) of the grinder (110) with the plants sucked up.

9. Device (10) according to one of claims 7 or 8, which comprises a means (135), immersed in the watercourse or body of water, for sectioning stems of plants to be ground.

10. Device (10) according to one of claims 7 to 9, which comprises a means (140) for sterilizing seeds ground together with the plants and having passed through the grinder (110).

11. Device (10) according to claim 10 wherein the bag (30) comprises at least one portion made of non-woven hemp.

12. Device (10) according to one of claims 7 to 10, which comprises a means (145) for loosening sediment fixed to a side of the watercourse or body of water.
